Europäisches Patentamt

(19) European Patent Office

Office européen des brevets

(11) Publication number: **0 286 607**
**A1**

(12) # EUROPEAN PATENT APPLICATION

(21) Application number: 88830139.7

(22) Date of filing: 30.03.88

(51) Int. Cl.⁴: **A 22 C 9/00**

(30) Priority: 10.04.87 IT 4003487

(43) Date of publication of application:
12.10.88 Bulletin 88/41

(84) Designated Contracting States:
AT CH DE FR GB LI NL

(71) Applicant: **COMITAR S.R.L.**
**Via dei Mille, 3**
**I-29100 Piacenza (IT)**

(72) Inventor: **Bertossi, Mario, Ing.**
**Via Bianchi, 35**
**I-29100 Piacenza (IT)**

(74) Representative: **Lanzoni, Luciano**
**c/o BUGNION S.p.A. Viale Trento Trieste, 25**
**I-41100 Modena (IT)**

(54) **Automatic beating and tenderizing machine for steaks, and slices of meat generally.**

㊻ The machine relates to the art field of treatment systems for conditioning steaks and similar slices of meat prior to cooking, and comprises a conveyor belt (6) on which the untreated steaks are arranged, and pairs of cylinders (19, 28) arranged side by side with axes parallel through which the tensioned belt is made to pass, carrying the steaks. Each pair of cylinders comprises a power driven cylinder (19), and a freely revolving cylinder (28) the axis of which can be shifted toward and way from the axis of the power driven cylinder; the belt (6) rides on the underside of the power driven cylinder (19) and on the top side of the freely revolving cylinder (28), in such a way that the steaks are pressed between the belt and the power driven cylinders. The pressed meat is prevented from clinging to the power driven cylinders by the action of revolving brushes (24) located one above each pair of cylinders.

Fig. 2

## Description

The invention relates to an automatic beating and tenderizing machine for steaks, and slices of meat generally.

Such a machine is designed for the conditioning of beef steaks, or other meat cut into slices, fresh or part-frozen, where a requirement exists for combined beating and tenderizing, or for beating only.

Conventionally, steaks are beaten and tenderized by hand; accordingly, the object of the invention is to render the operation of beating and tenderizing steaks an automatic process, capable of ensuring a constant, prescribed thickness of the meat treated. The stated object is realized comprehensively in an automatic beating and tenderizing machine according to the invention, which is characterized in that it comprises a looped conveyor belt on which steaks to be treated are arranged, and a plurality of pairs of cylinders, each pair consisting in one power driven cylinder and one freely revolving cylinder arranged side by side with axes parallel, through which the belt is made to pass, riding tensioned over the bottom side of the power driven cylinder and over the top side of the freely revolving cylinder, in such a way that the steaks are pressed between the conveyor belt and the power driven cylinders.

The invention will now be described in detail, by way of example, with the aid of the accompanying drawings, in which:

fig 1 is a perspective of the machine, viewed from one side, which illustrates the manner in which the power driven cylinders are operated;

fig 2 illustrates the principle of the machine in a schematic representation, viewed in section through I-I in fig 1;

fig 3 is a perspective of the machine, viewed from the side opposite to that of fig 1, illustrating tne devices serving for adjustment of the tenderizing and beating action;

fig 4 is a perspective showing a detail of one of the tenderizing cylinders;

fig 5 is a perspective showing a detail of one of the beating and thicknessing cylinders.

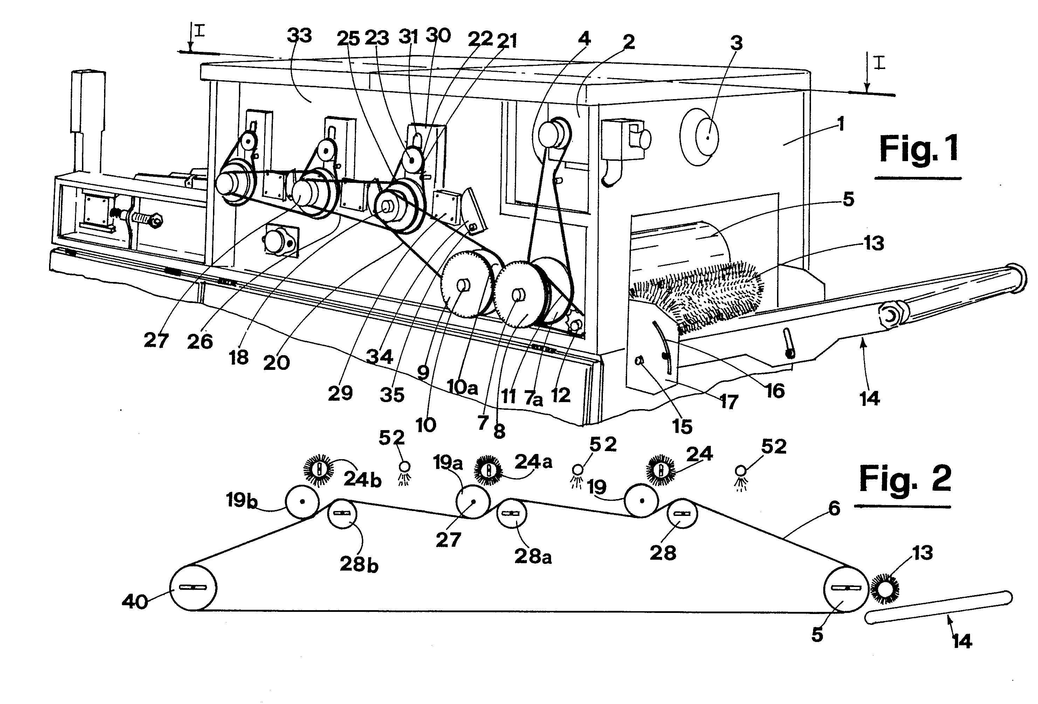

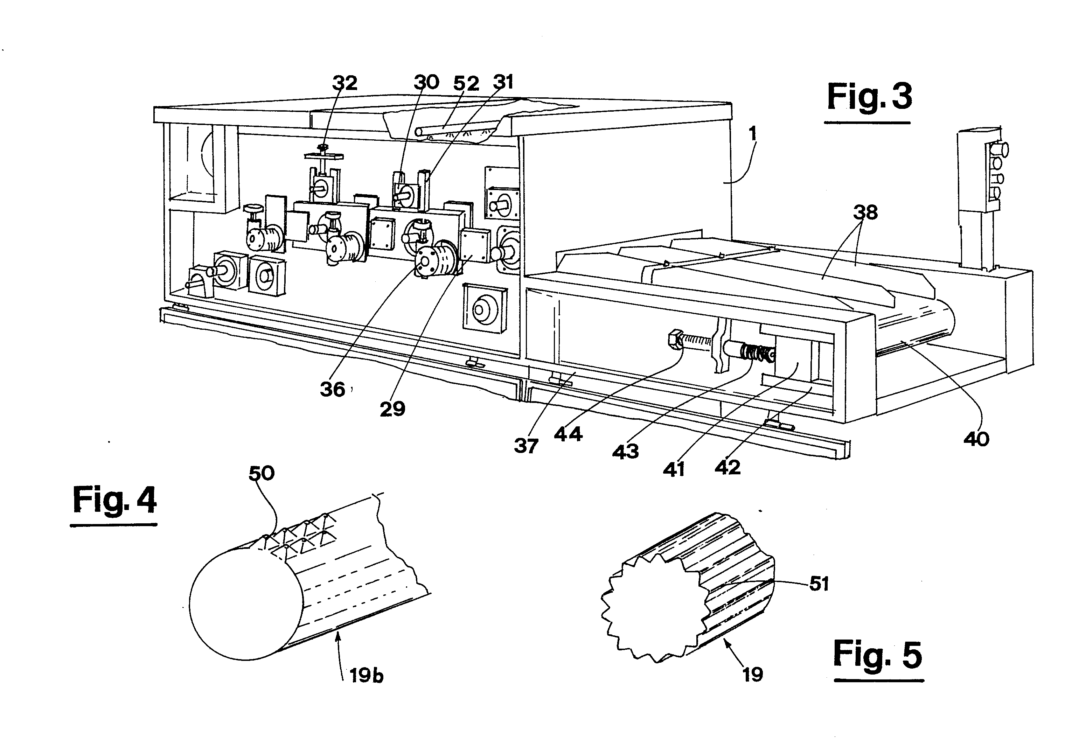

Referring to figs 1 and 3 of the drawings, 1 denotes a substantially parallelepiped frame internally of which a variable speed drive unit 2 is accommodated; 3 denotes a speed control handwheel.

The drive unit 2 is connected mechanically by way of a chain 4 to a sprocket 7a keyed to the shaft 7 of a roller 5 that drives a belt loop 6. The same shaft 7 also carries a keyed gear 8, which meshes with a further gear 9 keyed to a cross shaft 10 supported by the frame 1. A second sprocket (concealed, in the drawings) is similarly keyed to the shaft 7 of the drive roller 5 and connected by way of a chain 11 to a sprocket 12, this in its turn keyed to the shaft of a roller brush 13 suspended above a hinged runout conveyor belt 14 to which rotation is transmitted from the drive unit 2 in conventional manner (not illustrated).

The runout conveyor can be positioned to advantage by rotating it about its hinge axis 15, and locked fast by tightening a clamp screw which is slidably adjustable along a slot 16 cut in a plate 17 rigidly associated with the frame 1.

10a denotes a sprocket, keyed to the cross shaft 10 to which the second-mentioned gear 9 is keyed, and serving to transmit rotation by way of a chain 20 to a sprocket keyed onto a shaft 18 that coincides with the shaft of a cylinder denoted 19 (see fig 2). The shaft 18 in question carries another sprocket serving to transmit rotation, by way of a chain 21, to a sprocket 22 keyed to the shaft 23 of a brush cylinder 24 (see fig 2). 25 denotes a third sprocket keyed to this same shaft 18, which connects by way of a chain 26 with a sprocket keyed to a shaft 27 carrying a further cylinder 19a. In like manner, rotation is transmitted to a brush cylinder 24a located above this cylinder 19a, and cascaded to yet another cylinder 19b and brush cylinder 24b. Thus, the three cylinders denoted 19, 19a and 19b are all power driven, and rotate in the same direction. The shaft 23 of the brush cylinder 24 is journalled to blocks 30 that are slidable vertically in guide slots 31, and can be locked by means of screws 32 in the position that best controls the action of the brushes according to the desired thickness of the meat, and ensures that the steaks follow their prescribed course, as will shortly become clear.

To this end, the drive chain 21 is made longer than the nominal requirement, and tautened by suitable conventional tensioners; the same applies in the case of the remaining brush cylinders 24a and 24b. 28 denotes a freely revolving cylinder (see fig 2) disposed parallel to the power driven cylinder 19, the journal blocks 29 of which are able to slide horizontally in the side walls 33 of the frame 1, thereby distancing from or drawing closer to the power driven cylinder 19. This traversing movement of the freely revolving cylinder 28 is produced by a pair of cams 34 (of which only that on the side wall occupied by the drive system is visible) keyed to a shaft 35 that is rotated by way of a hand-operated gear unit 36. In like manner, each of the remaining power driven cylinders 19a and 19b is flanked by a relative freely revolving cylinder 28a and 28b, both similarly capable of horizontal movement toward or away from the corresponding power driven cylinder.

Accordingly, one power driven cylinder and one freely revolving cylinder constitute a pair, between which the conveyor belt 6 is directed; more exactly, the belt is made to ride over the bottom crest of each power driven cylinder and over the top crest of each freely revolving cylinder, as well as passing around the drive roller 5. The belt 6 is in fact a closed loop, and passes around a return roller 40 the journal blocks 41 of which are spring-loaded and slidably mounted in guides 42; the springs 43, which are adjustable by way of screws 44, urge the blocks away from the drive roller 6, thereby tensioning the conveyor belt loop 6. The journal blocks 41 of the return roller 40 are accommodated internally of two fenders 37, rigidly attached with the frame 1, which flank the infeed area from which the untreated meat enters the machine.

Thus, the steaks fed in on the conveyor belt 6 are pressed between the conveyor belt and each power driven roller.

The option exists of providing vertical fences 38 above the belt 6 at the infeed area, which create channels for division of the steaks into a number of single files.

52 denotes a hollow bar with nozzles, located above the conveyor belt between one brush cylinder and the next, through which hot water may be directed from a suitable boiler (installed in the frame, though not illustrated), to the end of effecting a periodic washdown of the belt, and of the machine as a whole. Needless to say, the bottom of the frame 1 will be fitted with a collection basin for the fouled water, and with a waste outlet.

Fig 4 provides a more detailed impression of the power driven cylinder 19b that performe the function of tenderizer. The cylinder 19b in question consists substantially in a roller on which a plurality of pyramidal teeth 50 are formed, the purpose of which is to soften up the meat by penetrating into it. By contrast, the two cylinders denoted 19a and 19 each consist in a roller having longitudinal ribs 51 that create a specially ridged profile, as shown in fig 5. The depth of the ribs on the one cylinder 19a is greater than that of the ribs on the other 19, as the former 19a is designed to implement an initial beating action, and the latter 19 to complete the beating process and determine the thickness of the meat.

Operation of the machine will now be described. Positioned on the conveyor belt, the steak or other slice of meat is carried forward and pressed between the belt and the profiled power driven cylinders, which first tenderize the meat, and then beat it. Rotating in the opposite direction to that of the power driven cylinders, the brush cylinders 24, 24a and 24b ensure that the steak does not cling to and wrap around the respective beating or tenderizing cylinder, and at the same time, effect a continuous cleaning action on the cylinders.

The thickness of the steak, or whatever meat, can be adjusted simply by shifting the freely revolving cylinders closer toward or farther from the relative power driven cylinders; the adjustment is made by turning the handle of the gear unit 36 to rotate the cams 34.

With beating and tenderizing accomplished, the steak passes onto the hinged runout conveyor 14 with the assistance of the roller brush 13, which prevents the meat from wrapping around the drive roller 5. In the event that the meat is to be beaten only, avoiding the tenderizing operation, the three power driven cylinders will exhibit practically identical profiles, their longitudinal ribs being pronounced to a greater or lesser degree.

The cylinders might be embodied as easily dismantled assemblies, in order to facilitate thorough cleaning or enable replacement of the belt in the event of breakage; the dismantling operation would be swift, inasmuch as the cylinder can be composed of a hollow element and two end flanges, the assembly being clamped coaxially by a longitudinal tie bolt.

## Claims

1) An automatic beating and tenderizing machine for steaks and other meat, characterized in that it comprises:
-a looped conveyor belt (6), on which steaks to be treated are arranged;
-a plurality of pairs of cylinders (19, 28), each pair consisting in one power driven cylinder and one freely revolving cylinder arranged side by side with axes parallel, through which the belt is made to pass, riding tensioned over the bottom side of the power driven cylinder (19) and over the top side of the freely revolving cylinder (28), in such a way that the steaks are pressed between the conveyor belt (6) and the power driven cylinders (19).

2) A beating and tenderizing machine as in claim 1, wherein the freely revolving cylinder (28) of each pair is provided with means (34, 36) by which its axis of rotation can be shifted closer toward or farther away from the axis of rotation of the power driven cylinder (19).

3) A beating and tenderizing machine as in claim 1, comprising a plurality of brush cylinders (24), each one of which is positioned above and rotates in the opposite direction to the power driven cylinder of a relative pair (19, 28).

4) A beating and tenderizing machine as in claim 1, comprising a plurality of hollow bars (52) provided with nozzles, positioned above and serving to wash down the conveyor belt.

5) A beating and tenderizing machine as in claim 2, wherein means for shifting the axis of rotation of the freely revolving cylinder consist in two cams (34) that impinge on the respective journal blocks of the cylinder and are rotated by means of a hand operated gear unit (36).

6) A beating and tenderizing machine as in claim 1, wherein the power driven cylinder (19) consists substantially in a roller carrying a plurality of pyramidal teeth (54).

7) A beating and tenderizing machine as in claim 1, wherein the power driven cylinder (19) consists substantially in a roller carrying a plurality of longitudinal ribs (51) that create a ridged profile.

8) A beating and tenderizing machine as in claim 1, wherein each cylinder consists in a hollow element and two end flanges, which are clamped together in coaxial alignment by means of a longitudinal tie bolt.

Fig.1

Fig. 2

0286607

Fig. 3

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 564 651 (W.F. SPANG) <br> * Whole document * <br> --- | 1,2,3,5 | A 22 C 9/00 |
| A | US-A-4 348 787 (G.G. WOLFF) <br> * Whole document * <br> --- | 1,6 | |
| A | US-A-2 287 278 (J.P. SPANG) <br> --- | | |
| A | US-A-1 889 192 (J.E. BRUCE) <br> --- | | |
| A | US-A-3 222 713 (S.S. STEIN et al.) <br> --- | | |
| A | US-A-4 525 896 (L.R. LEINING et al.) <br> --- | | |
| A | US-A-3 823 441 (E.W. BRIDGE Jr.) <br> ----- | | |

|  |
|---|
| TECHNICAL FIELDS SEARCHED (Int. Cl.4) |
| A 22 C |

The present search report has been drawn up for all claims

| Place of search | Date of completion of the search | Examiner |
|---|---|---|
| THE HAGUE | 20-07-1988 | DE LAMEILLIEURE D. |

EPO FORM 1503 03.82 (P0401)